# EUROPEAN PATENT SPECIFICATION

(11) **EP 4 071 436 B1**
(45) Date of publication and mention of the grant of the patent: **02.08.2023**
(21) Application number: 21167372.8
(22) Date of filing: 08.04.2021
(51) Int. Cl.: F28F 9/013, F28D 1/02, F28D 1/047, F28D 20/00, F16L 3/22, F16L 3/13

(54) **FIXATION AND METHOD FOR FIXING A TUBE OF A COIL TYPE HEAT EXCHANGER**
BEFESTIGUNG UND VERFAHREN ZUR BEFESTIGUNG EINES ROHRES EINES SPIRALWÄRMETAUSCHERS
FIXATION ET PROCÉDÉ DE FIXATION D'UN TUBE D'UN ÉCHANGEUR DE CHALEUR DE TYPE BOBINE

(43) Date of publication of application: 12.10.2022
(73) Proprietor: Daikin Europe N.V., 8400 Oostende (BE); DAIKIN INDUSTRIES, LTD., Osaka-Shi, Osaka 530-0001 (JP)
(72) Inventor: Kirschner, Timo, 74363 Güglingen (DE)
(74) Representative: Hoffmann Eitle

(56) References cited:
- EP-A1- 0 088 363
- CH-A- 350 699
- CH-A- 425 369
- DE-U1- 20 314 766
- DE-U1-202014 100 447
- JP-Y1- S4 212 066
- US-A- 4 240 604
- US-A1- 2004 007 648
- US-A1- 2018 266 588

## Description

### Technical Field

The present disclosure relates to a fixation for fixing a tube of a coil type heat exchanger. The present disclosure further relates to a set comprising at least two of said fixations and to a coil type heat exchanger having at least one said fixation. Furthermore, the present disclosure relates to a method for fixing a tube of a coil type heat exchanger.

### Background

Coil type heat exchangers are used for many applications including the generation of domestic hot water. In such coil type heat exchangers, a tube is wound in a helical shape around a support and fixed relative to the support at several locations along the helical path. The support may for example be a cylindrical wire mesh as disclosed in AT 007 834 U1. To fix the tube along the helical path, AT 007 834 U1 uses tube clips (fixation) having a reception portion for receiving the tube. The reception portion has an opening for inserting the tube into the reception portion, wherein two ribs are provided at the opening facing each other in a radial direction. During manufacture, the tube is pressed into the reception portion passing the ribs. Upon insertion of the tube into the reception portion, the tube is retained in the reception portion by the ribs, i.e. by form fit.

Other fixations to fix the tube at several locations along the helical path are disclosed in US 5,016,706 A and EP 2 009 337 A2. US 5,016,706 A discloses a wire having a plurality of reception portions and a separate locking wire extending over a plurality of reception portions to maintain the tube in the plurality of reception portions. EP 2 009 337 A2 discloses a wire having a plurality of reception portions having an opening smaller than the diameter of the tube. During insertion of the tube into the reception portion, the wire is pressed outward and the tube may enter the reception area via the thereby enlarged opening. After insertion of the tube in the plurality of reception portions, a separate locking wire is attached to maintain the tube in the plurality of reception portions.

It is known in the art to manufacture such coil type heat exchangers using a winding machine automatically winding the tube in a helical shape around a support and fixing the tube at several locations along the helical path. Yet, during the winding process, the tube will have to be securely maintained in the respective reception portions in order to avoid escaping of the tube from the reception portions during winding.

### Summary

In view of the aforesaid, it is an aim to provide a fixation and a method for fixing a tube of a coil type heat exchanger enabling reliable fixation of the tube without requiring an additional locking element and still allowing an automatic winding process.

The basic idea to achieve this aim is a fixation having first and second reception portions for receiving the tube and a locking automatically moved from a mounting position into a locking position upon insertion of the tube into a first reception portion to firmly lock the tube in a second reception portion adjacent to the first reception portion.

A fixation for fixing a tube of a coil type heat exchanger comprises a main body mountable to a support of the heat exchanger. The support may be a cylinder, a cylindrical wire mesh or a plurality of circumferentially distanced support bars extending substantially parallel to a center axis of the helical path of the tube coil. The fixation comprises a plurality of (two or more) reception portions. A first reception portion and a second reception portion of the plurality of reception portions are arranged side-by-side (adjacent to each other) in the main body. After winding of the tube, the first reception portion and the second reception portion are arranged in a row parallel to the center axis of the helical path of the tube coil. Each of the first and second reception portions has an opening for inserting the tube into the respective reception portion. The fixation further comprises a locking (e.g. a locking lever) movable relative to the main body between a mounting position and a locking position. In particular, the locking is movably connected to the main body between a mounting position and a locking position. The locking may be rotationally and/or translationally moveable. The locking has an engagement portion forming part of the first reception portion. The engagement portion is configured to be engaged by the tube for moving the locking from the mounting position into the locking position upon insertion of the tube into the first reception portion. Further, the locking has a locking portion, in the locking position of the locking, blocking at least part of the opening of the second reception portion thereby reliably securing the tube in the second reception portion.

As a result, the fixation enables an automatic and secure locking of the tube without the need of additional parts separate from the fixation.

The main body and the locking may be hinged to each other. In other words, the locking is rotatably connected to the main body. For example, a two-step injection molding process may be used allowing to manufacture the locking, including e.g. an axis of the hinge as a first part of the hinge, in a first step and the main body, including the bearing as a second part of the hinge for receiving the axis of the hinge, in a second step. Alternatively, the main body and the locking may be connected via an integral hinge.

Consequently, the fixation may be produced as a one/two-piece plastic molding and, thus, be simple and inexpensive.

Further, the locking may be biased towards the mounting position. In an example, an elastic element, such as a spring, may be used for biasing the locking towards the mounting position. If the locking and the main body are connected via an integral hinge, the integral hinge may at the same time be configured to bias the locking towards the mounting position and, thus, have spring characteristics.

Due to this configuration, reliable engagement of the tube with the engagement portion of the locking during the winding process and, thereby, moving the locking into the locking position may be realized.

Furthermore, the openings of the (first and second) reception portions may even after insertion of the tube (when the locking is in the locking position), perpendicular to an insertion direction of the tube, be smaller than the diameter of the tube. To put it differently, the reception portions may have a largest dimension in cross-section along an arrangement direction of the reception portions (in a direction parallel to the center axis of the helical path of the tube coil) and the largest dimension of the opening in the cross-section along the arrangement direction is smaller than the outer diameter of the tube. In one example, an inner circumference of the reception portions circumscribes more than a half circle even when the locking is in the locking position.

Accordingly, the tube may preliminarily be retained in the respective reception portion until the consecutive locking is moved into the locking position by inserting the tube into the consecutive (next) reception portion.

In another example, the openings of the (first and second) reception portions may before insertion of the tube (when the locking is in the mounting position), perpendicular to an insertion direction of the tube, be smaller than the diameter of the tube. In this example, the locking may, in part, form the opening and an inner circumference of the reception portions may circumscribe more than a half circle only when the locking is in the mounting position but at most half circle when in the locking position.

Thus, movement of the locking into the locking position may be improved in that the movement is already initiated at the time the tube enters the opening. In particular, the tube is inserted against some resistance into the opening pressing the locking towards the outside relative to the opening.

If the tube itself provides for a certain flexibility, the tube can even be inserted into the reception portion if the opening is smaller than the outer diameter of the tube. Yet, if deformation of the tube is to be avoided, at least one of opposite edges of the openings of the first and second reception portions may be flexible to allow insertion of the tube into the respective reception portion. In an example, as mentioned above, the flexible edges may be formed by the locking.

Hence, insertion of the tube into the respective reception portions without deformation of the tube is enabled.

In an embodiment, the fixation may comprise an end locking movably connected to the main body between a mounting position and a locking position, the end locking having an end locking portion, in the locking position of the end locking, blocking at least part of the opening of the first reception portion.

Thus, once the final winding of the tube has been inserted into the last reception portion, which may be the first reception portion, one may manually move the end locking into the locking position to finally lock the final winding of the tube.

The main body may have a first engagement member and the locking, and/or the end locking may have a second engagement member, wherein the first and second engagement members are engaged upon movement of the locking into the locking position. The first and second engagement members are particularly useful with respect to the end locking because the end locking is, contrary to the other locking/-s), not maintained in the locking position by the tube in the consecutive reception portion.

In any case, due to this configuration, the locking or end locking is fixed and retained in the locking position upon movement of the locking into the locking position by engagement of the tube with the engagement portion or by manual movement. No separate parts are required to realize the final fixation.

In one example, the first and second engagement members constitute a snap connection.

Thus, ease of manufacture may be maintained, i.e. the fixation may for example still be manufactured as a one-piece injection molding product.

Further, a set comprising a least two of the above described fixations is disclosed.

In one embodiment of the set, the main body of each of the fixations may comprise a first connector at a first end in an arrangement direction of the first and second reception portions and a second connector at a second end opposite to the first end in the arrangement direction, wherein the first connector of one fixation and the second connector of another fixation are connectable to fix two of the fixations to each other.

Thus, depending on the type of heat exchanger to be manufactured, two or more of the fixations may be connected. As a result, it is easy to adapt the fixation, for example two different heights of different types of heat exchangers.

Moreover, the fixations of the set may have the same or a different number of reception portions.

If the same number of reception portions is provided, easy and cost-effective manufacturing and storing may be achieved. However, if the two fixations have a different number of reception areas, one obtains more flexibility to adapt to different types of heat exchangers. It is also possible to provide respective end fixations for a first end at a start of the winding and a second end at the end of the winding along the center axis of the helical path. The end fixation at the first end may have no locking at the first end and the end fixation at the second end may have an end locking at the second end.

If the fixations have the same configuration, they may comprise part of a reception portion at the first and second end, wherein one part of the reception portion at a first end of a first fixation and one part of the reception area at the second end of a second fixation form the reception portion upon connection of the first and second fixation.

Thus, ease of manufacture may be maintained in that the separation occurs in a position distanced from the locking.

The present disclosure also concerns a coil type heat exchanger, particularly for a domestic hot water tank. The coil type heat exchanger comprises a support and a fixation or a set as described above, wherein the fixation/-s is/are mounted to the support and a tube inserted in the first and second reception portions, wherein the tube in the second reception portion is at least in part retained by the locking portion of the locking.

Moreover, the present disclosure relates to a method for fixing a tube of the coil type heat exchanger. The method comprises the steps of mounting a fixation to a support of the heat exchanger. The fixation may be configured as described above. Thus, the fixation comprises a first reception portion and a second reception portion arranged side-by-side in a main body and each having an opening. During the winding process, a tube is inserted via the opening of the second reception portion into the second reception portion and subsequently via the opening of the first reception portion into the first reception portion, whereby the tube inserted into the first reception portion moves a locking of the fixation into a locking position so that a locking portion of the locking blocks at least part of the opening of the second reception portion, thereby at least in part retaining the tube in the second reception portion by form fit.

If the fixation comprises the end locking described above, the method may further comprise the step of manually moving the end locking into the locking position so that the end locking portion of the end locking blocks at least part of the opening of the first reception portion, thereby at least in part retaining the tube in the first reception portion.

The method may further comprise the step of mounting a plurality of fixations to the support of the heat exchanger. If the fixations are part of a set as described above the first connector of one of the fixations and the second connector of another one of the fixations are connected before or during mounting, the fixations to the support thereby attaching the fixations to each other.

### Brief Description of the Drawings

Figure 1 is a schematic view of a domestic hot water tank comprising a coil-type heat exchanger not showing the fixation.
Figure 2 is a schematic side view of a fixation according to the present invention showing the lockings in the mounting position.
Figure 3 is a schematic side view of the fixation in Figure 2 but showing two of the lockings in the locking position.
Figure 4a is a schematic view of the engagement mechanism in a view along the line A-A in Figure 2 and Figure 4b is a schematic side view of Figure 4a.
Figure 5 shows two of the fixations of Figure 2 which may be connected via the first and second connector, respectively.

### Detailed Description

The following detailed description of an embodiment of the present invention makes reference to the accompanying drawings, wherein the same reference numerals denote the same elements throughout the drawings.

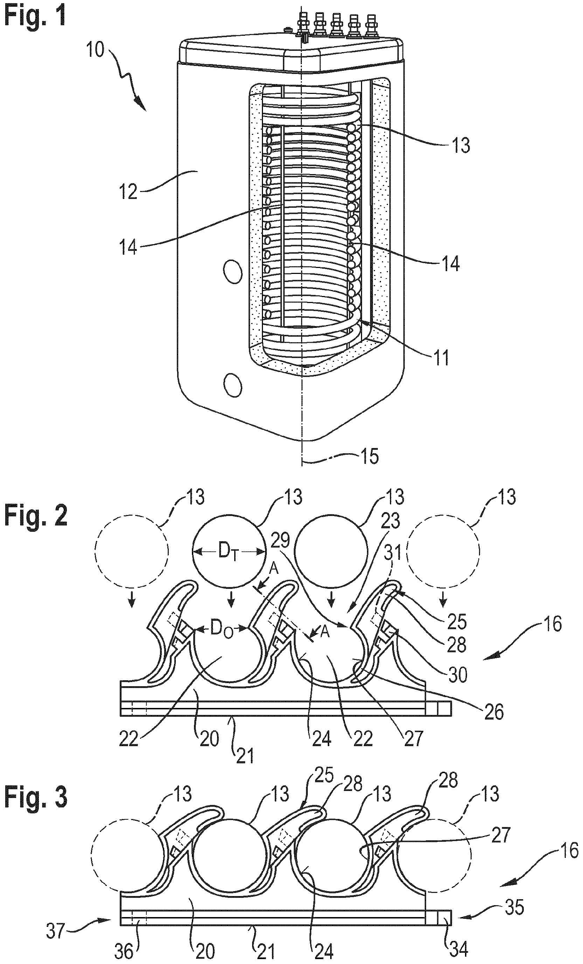

Figure 1 shows a hot water tank 10 for producing domestic hot water. The hot water tank 10 comprises a coil-type heat exchanger 11 accommodated in a casing 12 of the hot water tank 10 to exchange heat with the medium, such as domestic hot water or a heat storage medium, contained in the tank. The coil-type heat exchanger 11 comprises a helically wound tube 13. The tube 13 may consist of a corrugated tube and may be made of stainless steel. The helically wound tube 13 is fixed to a support such as a support structure comprising a plurality of support bars 14. Yet, it is also conceivable to use other support structures such as a wire mesh, etc..

The support bars 14 are longitudinal and extend vertically, that is parallel to a center axis 15 of the helically path. The support bars 40 may be fixed relative to and/or to the casing 12 of the hot water tank 10. The coil-type heat exchanger 11 may on the other hand as well merely be suspended within the casing 10. The tube 13 is fixed at several locations along the helical path to the support bars 14. For this purpose, fixations 16 are mounted to the support bars 14.

The fixations 16 mounted to the support bars 14 may be assembled from a plurality of fixations as shown in Figures 1 and 2.

The fixation 16 shown in Figure 2 comprises a main body 20. The main body 20 has a mounting surface 21 for mounting the fixation 16 to the support, for example the support bars 14.

Moreover, a plurality of reception portions 22 (two and two-halves in the shown embodiment) are formed in the main body 20. The reception portions 22 are arranged side-by-side in an arrangement direction. When mounted to the support, particularly the support bars 14, the arrangement direction extends parallel to the center axis 15 of the helical path (in the present embodiment vertically).

Each of the reception portions 22 has an opening 23 for inserting the tube 13 into the respective reception portion 22. The openings 23, as seen in the side view (Figures 2 and 3), have a dimension D_{O} smaller than the outer diameter D_{T} of the tube 13 when the later described locking 25 is in the mounting position. To put it differently, the reception portions 22 have a largest dimension D_{O} in cross-section along the arrangement direction or in a side view perpendicular to the arrangement direction of the reception portions 22. The largest dimension D_{O} of the opening is smaller than the outer diameter D_{T} of the tube 13.

The fixation 16 further comprises a locking 25 movably connected to the main body 20. In particular, the locking 25 is movable (rotatable) between a mounting position shown in Figure 2 and a locking position shown in Figure 3. The connection of the locking 25 to the main body 20 may be obtained via an integral hinge 26. Thus, the locking 25 and the main body 20 may be embodied as a single piece product, such as an injection mold. Alternatively, the locking 25 and the main body 20 may be connected by an ordinary hinge. The ordinary hinge may as well be manufactured in a two shot injection molding process, wherein the locking 25 is molded first with one part of the hinge (e.g. the axis) and the main body 20 is molded second with the second part of the hinge (e.g. the bearing for the axis).

The locking 25 may be biased towards the mounting position. For this purpose, the integral hinge 26 may additionally provide for spring characteristics. Alternatively, another elastic element, such as a spring, may be disposed between the locking 25 and the main body 20 to provide for the bias.

Each locking 25 further has an engagement portion 27 forming part of a respective first one of the reception portions 22 and a locking portion 28 forming part of a respective second one of the reception portions 22. The engagement portion 27 serves for moving the locking 25 from the mounting position in Figure 2 into the locking position in Figure 3 upon insertion of the tube 13 into the first reception portion. Hence, the locking is positioned between two adjacent reception portions. The locking portion 28 serves, in the locking position, for blocking at least part of the opening 23 of the second reception portion in the locking position.

Each locking 25, in the shown embodiment, further forms an edge 29 of the opening 23 of the respective reception portions 22 also having the engagement portion 27 of the locking 25. Due to the movability of the locking 25, the edge 29 of the opening 23 is flexible to allow insertion of the tube 13 into the respective reception portion 22.

In one example, the inner circumference 24 of the reception portions circumscribes more than a half circle when the locking 25 is in the mounting position and at most a half circle when in the locking position.

Moreover, an engagement mechanism is provided with respect to each of the lockings 25. In particular, the main body 20 has (a) first engagement member(-s) 30 and the locking 25 has (a) second engagement member(-s) 31. The first and second engagement members 30 and 31 may be configured as a snap connection. The first and second engagement members are automatically engaged upon movement of the locking 25 into the locking position and thereby automatically maintain the locking 25 in the locking position. The engagement mechanism is particularly useful for the first reception portion in the arrangement direction and the last reception portion in the arrangement direction along the center axis 15 of the helical path as will be explained in more detail below.

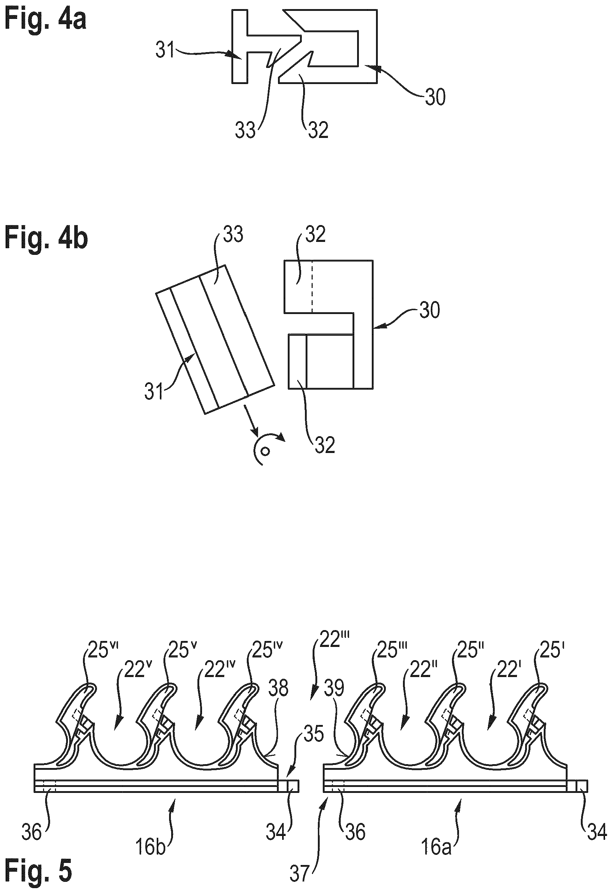

As shown in Figures 4a and 4b oppositely oriented facing hooks 32 may be provided on the main body 20. The locking 25 may have oppositely shaped hooks 33 so that the hooks 32 may upon movement of the locking 25 into the locking position catch behind the hooks 33.

The main body 20 of each of the fixations 16 comprises a first connector 34 at a first end 35 in an arrangement direction of the reception portions 22 and a second connector 36 at a second end 37 opposite to the first end 35 in the arrangement direction.

As will be apparent from Figure 5, two fixations 16 may respectively be attached to each other by engaging the first and second connectors 34, 36. Also the first and second connectors 34, 36 may be configured as a snap connection comprising hooks engaging behind a shoulder as explained above with respect to the first and second engagement members 30, 31. Thus, depending on the height of the coil-type heat exchanger 11, one, two or more of the fixations 16 may be used to form a fixation structure for fixing the tube 13 along the helical path to the support, such as the support bars 14.

At one end in the arrangement direction of such a fixation structure, one of the lockings 25, namely that at the very end in the arrangement direction, may serve as an end locking. The end locking in the present embodiment also has an engagement portion because all fixations 16 have the same configuration.

Yet, it is also conceivable to provide a differently configured fixation to be disposed at the end or even at the beginning of the fixation structure. In this instance, the end locking will, in the same manner as the locking 25, be movably connected to the main body between a mounting position and a locking position, the end locking having an end locking portion, in the locking position of the end locking, blocking at least part of the opening of the last reception portion. Yet, in this configuration, the end locking will likely not have an engagement portion.

Preferably the fixations 16, however, all have the same configuration. As shown in the embodiment, the fixations 16 may, at the first end 35 and the second end 37, comprise a part/portion/half 38, 39 of a reception portion 22, wherein a first part 38 of the reception portion 22^{III} at a first end 35 of a first fixation 16ₐ and a second part 39 of the reception area 22^{III} at the second end 37 of a second fixation 16_{b} form the reception portion 22^{III} upon connection of the first and second fixation 16ₐ and 16_{b}.

In the following, use of the fixation described above for fixing a tube of a coil-type heat exchanger during a winding process is described with respect to Figure 5.

To begin with and depending on the height of the intended coil-type heat exchanger, a plurality of fixations 16 are attached to each other by engaging the first connector 34 and the second connector 36, respectively. During this process, a first part 38 of the reception portion 22^{III} and a second part 39 of the reception portion 22^{III} are combined to form the reception portion 22^{III}.

For starting the winding process, one end of the tube 13 is inserted into the starting reception portion, such as the reception portion 22^{I} in Figure 5. Upon insertion of the tube 13 into the starting reception portion 22^{I}, the tube 13 engages the engagement portion 27^{I} of the locking 25^{I} moving the locking 25 into the locking position. In the locking position, the first and second engagement members 30, 31 are engaged fixing the locking 25 in the locking position. However, in this case, the locking 25^{I} has no function.

Subsequently, a user may manually close the subsequent locking 25^{II} (move the subsequent locking 25^{II} into the locking position) engaging the first and second engagement members 30, 31 thereby fixing the locking 25^{II} in the locking position and securing the end of the tube 13 in the starting reception portion 22^{I} in that the locking portion 28^{II} blocks a part of the opening 23^{I} of the starting reception portion 22^{I}.

Subsequently, the automatic winding process may be started. During this process, the tube 13 will be inserted into one reception portion 22 after the other in the arrangement direction of the reception portions 22.

Accordingly, the tube 13 is in a next step inserted into the reception portion 22^{II}. As the locking 25^{II} was already manually closed, insertion of the tube 13 into the reception portion 22^{II} does not initiate the automatic movement of the locking 25^{II}.

Next, the tube 13 is inserted into the reception portion 22^{III} (first reception portion). During this process, the tube 13 is engaged with the edge 29^{III} and the engagement portion 27^{III} of the locking 25^{III} pressing the locking 25^{III} into the locking position against the spring force of the integral hinge 26^{III}. In the locking position, the locking portion 28^{III} of the locking 25^{III} blocks part of the opening 23^{II} of the previous reception portion in the arrangement direction, thus, securely fixing the tube 13 in the reception portion 22^{II} (second reception portion) in place. Also during this process, the first and second engagement members 30, 31 are automatically engaged fixing the locking 25^{III} in the locking position.

This process is repeated until the end of the fixation structure in the vertical direction (in the arrangement direction) is reached, i.e. the reception portion 22^{V} in the schematic representation of Figure 5. The tube 13 and the last reception portion 22^{V} in the arrangement direction is again fixed by manually moving the last locking 25^{VI} (end locking) into the locking position and engaging the first engagement member 30, 31 to fix the locking portion 25^{V} (end locking) in place.

As a result, the winding process may still be performed automatically with only the first 25^{I} and/or the last locking 25^{V} being manually moved into the locking position. Thus, ease of manufacture may be obtained so that the costs may be reduced. Additionally, a secure fixation of the helically wound tube 13 of the coil-type heat exchanger 11 is achieved.

### Reference List

- 10: hot water tank
- 11: coil-type heat exchanger
- 12: casing
- 13: tube
- 14: support bars
- 15: center axis
- 16: fixation
- 20: main body
- 21: mounting surface
- 22: reception portion
- 23: opening of reception portion
- 24: inner circumference
- 25: locking
- 26: integral hinge
- 27: engagement portion
- 28: locking portion
- 29: edge
- 30: first engagement member
- 31: second engagement member
- 32: hook
- 33: hook
- 34: first connector
- 35: first end
- 36: second connector
- 37: second end
- 38: first part of reception portion
- 39: second part of reception portion

## Claims

1. Fixation (16) for fixing a tube (13) of a coil type heat exchanger (11), the fixation comprising:
a main body (20) mountable to a support (14) of the heat exchanger (11);
a first reception portion (22) and a second reception portion (22) arranged side-by-side in the main body and each having an opening (23) for inserting the tube (13) into the respective reception portion (22);
a locking (25) movably connected to the main body (20) between a mounting position and a locking position;
**characterized in that**
the locking (25) has
an engagement portion (27) forming part of the first reception portion (22) for moving the locking (25) from the mounting position into the locking position upon insertion of the tube (23) into the first reception portion (22), and
a locking portion (28), in the locking position of the locking (25), blocking at least part of the opening (23) of the second reception portion (22).

2. Fixation according to claim 1, wherein the main body (20) and the locking (25) are connected via a hinge (26).

3. Fixation according to claim 1 or 2, wherein the locking (25) is biased towards the mounting position.

4. Fixation according to any one of the preceding claims, wherein the openings (23) of the first and second reception portions (22) are, perpendicular to an insertion direction of the tube (13), smaller than the diameter of the tube (13).

5. Fixation according to claim 4, wherein at least one of opposite edges (29) of the openings (23) of the first and second reception portions (22) is flexible to allow insertion of the tube (13) into the respective reception portion (22).

6. Fixation according to any one of the preceding claims, further comprising an end locking (25^{VI}) movably connected to the main body (20) between a mounting position and a locking position, the end locking (25^{VI}) having an end locking portion (28^{V}), in the locking position of the end locking, (25^{VI}) blocking at least part of the opening (23) of the first reception portion (22).

7. Fixation according to any one of the preceding claims, wherein the main body (20) has a first engagement member (30) and the locking (25) has a second engagement member (31), wherein the first and second engagement members (30, 31) are engaged upon movement of the locking (25) into the locking position.

8. Fixation according to claim 7, wherein the first and second engagement members (30, 31) constitute a snap connection.

9. Set comprising at least two fixations (16) according to any one of the preceding claims, wherein the main body (20) of each of the fixations (16) comprises a first connector (34) at a first end (35) in an arrangement direction of the first and second reception portions (22) and a second connector (36) at a second end (37) opposite to the first end (35) in the arrangement direction, wherein the first connector (34) of one fixation (16ₐ) and the second connector (36) of another fixation (16_{b}) are connectable to fix the two fixations (16ₐ, 16_{b}) to each other.

10. Set according to claim 9, wherein the fixations have the same or a different number of reception portions (22).

11. Set according to claim 9 or 10, wherein the fixations (16) each comprise part (38, 39) of a reception portion (22) at the first end (35) and the second end (37), wherein one part (38) of the reception portion at a first end (35) of a first fixation (16ₐ) and one part (39) of the reception portion at the second end (37) of a second fixation (16_{b}) form the reception portion (22) upon connection of the first and second fixations.

12. Coil type heat exchanger, particularly for a hot water tank, comprising
a support (14),
a fixation (16) according to any one of claims 1 to 8 or a set according to any one of claims 9 to 11, wherein the fixation/-s (16) are mounted to the support (14),
a tube (13) inserted in the first and second reception portions (22), wherein the tube (13) in the second reception portion (22) is at least in part retained by the locking portion (28) of the locking (25).

13. Method for fixing a tube (13) of a coil type heat exchanger (11), comprising the steps of:
mounting a fixation (16) to a support (14) of the heat exchanger (11), the fixation comprising a first reception portion (22) and a second reception portion (22) arranged side-by-side in a main body (20) and each having an opening (23) ;
inserting a tube (13) via the opening (23) of the second reception portion (22) into the second reception portion (22);
inserting the tube (13) via the opening (23) of the first reception portion (22) into the first reception portion, **characterized in that** the tube (13) moves a locking (25) of the fixation (16) into a locking position so that a locking portion (28) of the locking (25) blocks at least part of the opening (23) of the second reception portion (22), thereby at least in part retaining the tube (13) in the second reception portion (22).

14. Method according to claim 13, wherein the fixation (16) is a fixation according to any one of claims 1 to 8.

15. Method according to claim 13 or 14, wherein the fixation (16) is a fixation according to claim 6, the method further comprising the step of:
manually moving the end locking (25^{V}) into the locking position so that the end locking portion (28^{V}) of the end locking blocks at least part of the opening (23) of the first reception portion (22), thereby at least in part retaining the tube (13) in the first reception portion (22).

16. Method according to any one of claims 13 to 15, wherein a plurality of fixations (16) are mounted to the support (14) of the heat exchanger, wherein when the fixations (16) are part of a set according to claims 9 to 12, the method further comprising the step of:
connecting the first connector (34) of one of the fixations (16ₐ) and the second connector (37) of another one of the fixations (16_{b}) thereby fixing the fixations to each other.

## Patentansprüche

1. Befestigung (16) zur Befestigung eines Rohres (13) eines Spiralwärmetauschers (11), wobei die Befestigung Folgendes umfasst:
einen Hauptkörper (20), der an einem Träger (14) des Wärmetauschers (11) montierbar ist;
einen ersten Aufnahmeabschnitt (22) und einen zweiten Aufnahmeabschnitt (22), die nebeneinander in dem Hauptkörper angeordnet sind und jeweils eine Öffnung (23) zum Einführen des Rohres (13) in den jeweiligen Aufnahmeabschnitt (22) aufweisen;
eine Verriegelung (25), die mit dem Hauptkörper (20) zwischen einer Montageposition und einer Verriegelungsposition bewegbar verbunden ist;
**dadurch gekennzeichnet, dass**
die Verriegelung (25)
einen Eingriffsabschnitt (27), der einen Teil des ersten Aufnahmeabschnitts (22) zum Bewegen der Verriegelung (25) aus der Montageposition in die Verriegelungsposition bei Einführung des Rohres (23) in den ersten Aufnahmeabschnitt (22) bildet, und
einen Verriegelungsabschnitt (28), der in der Verriegelungsposition der Verriegelung (25) mindestens einen Teil der Öffnung (23) des zweiten Aufnahmeabschnitts (22) blockiert, aufweist.

2. Befestigung nach Anspruch 1, wobei der Hauptkörper (20) und die Verriegelung (25) über ein Scharnier (26) verbunden sind.

3. Befestigung nach Anspruch 1 oder 2, wobei die Verriegelung (25) hin zu der Montageposition vorgespannt ist.

4. Befestigung nach einem der vorstehenden Ansprüche, wobei die Öffnungen (23) des ersten und zweiten Aufnahmeabschnitts (22) senkrecht zu einer Einführungsrichtung des Rohres (13) kleiner als der Durchmesser des Rohres (13) sind.

5. Befestigung nach Anspruch 4, wobei mindestens eine von gegenüberliegenden Kanten (29) der Öffnungen (23) des ersten und zweiten Aufnahmeabschnitts (22) zum Ermöglichen des Einführens des Rohres (13) in den jeweiligen Aufnahmeabschnitt (22) flexibel ist.

6. Befestigung nach einem der vorstehenden Ansprüche, weiter umfassend eine Endverriegelung (25^{VI}), die mit dem Hauptkörper (20) zwischen einer Montageposition und einer Verriegelungsposition bewegbar verbunden ist, wobei die Endverriegelung (25^{VI}) einen Endverriegelungsabschnitt (28^{V}) aufweist, der in der Verriegelungsposition der Endverriegelung (25^{VI}) mindestens einen Teil der Öffnung (23) des ersten Aufnahmeabschnitts (22) blockiert.

7. Befestigung nach einem der vorstehenden Ansprüche, wobei der Hauptkörper (20) ein erstes Eingriffselement (30) aufweist und die Verriegelung (25) ein zweites Eingriffselement (31) aufweist, wobei das erste und zweite Eingriffselement (30, 31) bei Bewegung der Verriegelung (25) in die Verriegelungsposition in Eingriff gebracht werden.

8. Befestigung nach Anspruch 7, wobei das erste und zweite Eingriffselement (30, 31) eine Schnappverbindung bilden.

9. Satz, der mindestens zwei Befestigungen (16) nach einem der vorstehenden Ansprüche umfasst, wobei der Hauptkörper (20) jeder der Befestigungen (16) ein erstes Verbindungselement (34) an einem ersten Ende (35) in einer Anordnungsrichtung des ersten und zweiten Aufnahmeabschnitts (22) und ein zweites Verbindungselement (36) an einem zweiten Ende (37), das dem ersten Ende (35) in der Anordnungsrichtung gegenüberliegt, umfasst, wobei das erste Verbindungselement (34) einer Befestigung (16ₐ) und das zweite Verbindungselement (36) einer anderen Befestigung (16_{b}) zum aneinander Befestigen der beiden Befestigungen (16ₐ, 16_{b}) verbindbar sind.

10. Satz nach Anspruch 9, wobei die Befestigungen die gleiche oder eine unterschiedliche Anzahl von Aufnahmeabschnitten (22) aufweisen.

11. Satz nach Anspruch 9 oder 10, wobei die Befestigungen (16) jeweils einen Teil (38, 39) eines Aufnahmeabschnitts (22) an dem ersten Ende (35) und dem zweiten Ende (37) umfassen, wobei ein Teil (38) des Aufnahmeabschnitts an einem ersten Ende (35) einer ersten Befestigung (16ₐ) und ein Teil (39) des Aufnahmeabschnitts an dem zweiten Ende (37) einer zweiten Befestigung (16_{b}) den Aufnahmeabschnitt (22) bei Verbindung der ersten und zweiten Befestigung bilden.

12. Spiralwärmetauscher, insbesondere für einen Heißwassertank, umfassend
einen Träger (14),
eine Befestigung (16) nach einem der Ansprüche 1 bis 8 oder einen Satz nach einem der Ansprüche 9 bis 11, wobei die Befestigung/en (16) an dem Träger (14) montiert sind,
ein Rohr (13), das in dem ersten und zweiten Aufnahmeabschnitt (22) eingeführt ist, wobei das Rohr (13) in dem zweiten Aufnahmeabschnitt (22) mindestens teilweise durch den Verriegelungsabschnitt (28) der Verriegelung (25) festgehalten ist.

13. Verfahren zur Befestigung eines Rohres (13) eines Spiralwärmetauschers (11), das die folgenden Schritte umfasst:
Montieren einer Befestigung (16) an einem Träger (14) des Wärmetauschers (11), wobei die Befestigung einen ersten Aufnahmeabschnitt (22) und einen zweiten Aufnahmeabschnitt (22) umfasst, die nebeneinander in einem Hauptkörper (20) angeordnet sind und jeweils eine Öffnung (23) aufweisen;
Einführen eines Rohres (13) über die Öffnung (23) des zweiten Aufnahmeabschnitts (22) in den zweiten Aufnahmeabschnitt (22);
Einführen des Rohres (13) über die Öffnung (23) des ersten Aufnahmeabschnitts (22) in den ersten Aufnahmeabschnitt, **dadurch gekennzeichnet, dass** das Rohr (13) eine Verriegelung (25) der Befestigung (16) in eine Verriegelungsposition bewegt, sodass ein Verriegelungsabschnitt (28) der Verriegelung (25) mindestens einen Teil der Öffnung (23) des zweiten Aufnahmeabschnitts (22) blockiert, wodurch er das Rohr (13) mindestens teilweise in dem zweiten Aufnahmeabschnitt (22) festhält.

14. Verfahren nach Anspruch 13, wobei die Befestigung (16) eine Befestigung nach einem der Ansprüche 1 bis 8 ist.

15. Verfahren nach Anspruch 13 oder 14, wobei die Befestigung (16) eine Befestigung nach Anspruch 6 ist, wobei das Verfahren weiter den folgenden Schritt umfasst: manuelles Bewegen der Endverriegelung (25^{V}) in die Verriegelungsposition, sodass der Endverriegelungsabschnitt (28^{V}) der Endverriegelung mindestens einen Teil der Öffnung (23) des ersten Aufnahmeabschnitts (22) blockiert, wodurch er das Rohr (13) mindestens teilweise in dem ersten Aufnahmeabschnitt (22) festhält.

16. Verfahren nach einem der Ansprüche 13 bis 15, wobei eine Vielzahl von Befestigungen (16) an dem Träger (14) des Wärmetauschers montiert ist, wobei, wenn die Befestigungen (16) Teil eines Satzes nach den Ansprüchen 9 bis 12 sind, das Verfahren weiter den folgenden Schritt umfasst:
Verbinden des ersten Verbindungselements (34) einer der Befestigungen (16ₐ) und des zweiten Verbindungselements (37) einer anderen der Befestigungen (16_{b}), wodurch die Befestigungen aneinander befestigt werden.

## Revendications

1. Fixation (16) pour fixer un tube (13) d'un échangeur de chaleur (11) de type bobine, la fixation comprenant :
un corps principal (20) pouvant être monté sur un support (14) de l'échangeur de chaleur (11) ;
une première portion de réception (22) et une seconde portion de réception (22) agencées côte à côte dans le corps principal et ayant chacune une ouverture (23) pour insérer le tube (13) dans la portion de réception (22) respective ;
un dispositif de verrouillage (25) relié de manière mobile au corps principal (20) entre une position de montage et une position de verrouillage ;
**caractérisée en ce que**
le dispositif de verrouillage (25) a
une portion d'engagement (27) formant une partie de la première portion de réception (22) pour déplacer le dispositif de verrouillage (25) de la position de montage à la position de verrouillage lors de l'insertion du tube (23) dans la première portion de réception (22), et
une portion de verrouillage (28), dans la position de verrouillage du dispositif de verrouillage (25), bloquant au moins une partie de l'ouverture (23) de la seconde portion de réception (22).

2. Fixation selon la revendication 1, dans laquelle le corps principal (20) et le dispositif de verrouillage (25) sont reliés par une charnière (26).

3. Fixation selon la revendication 1 ou la revendication 2, dans laquelle le dispositif de verrouillage (25) est sollicité vers la position de montage.

4. Fixation selon l'une quelconque des revendications précédentes, dans laquelle les ouvertures (23) des première et seconde portions de réception (22) sont, perpendiculairement à une direction d'insertion du tube (13), plus petites que le diamètre du tube (13).

5. Fixation selon la revendication 4, dans laquelle au moins l'un des bords (29) opposés des ouvertures (23) des première et seconde portions de réception (22) est flexible pour permettre l'insertion du tube (13) dans la portion de réception (22) respective.

6. Fixation selon l'une quelconque des revendications précédentes, comprenant en outre un dispositif de verrouillage d'extrémité (25^{VI}) relié de manière mobile au corps principal (20) entre une position de montage et une position de verrouillage, le dispositif de verrouillage d'extrémité (25^{VI}) ayant une portion de verrouillage d'extrémité (28^{v}), dans la position de verrouillage du dispositif de verrouillage d'extrémité, (25^{VI}) bloquant au moins une partie de l'ouverture (23) de la première portion de réception (22).

7. Fixation selon l'une quelconque des revendications précédentes, dans laquelle le corps principal (20) a un premier élément d'engagement (30) et le dispositif de verrouillage (25) a un second élément d'engagement (31), dans laquelle les premier et second éléments d'engagement (30, 31) sont amenés en engagement lors du mouvement du dispositif de verrouillage (25) dans la position de verrouillage.

8. Fixation selon la revendication 7, dans laquelle les premier et second éléments d'engagement (30, 31) constituent une liaison par encliquetage.

9. Ensemble comprenant au moins deux fixations (16) selon l'une quelconque des revendications précédentes, dans lequel le corps principal (20) de chacune des fixations (16) comprend un premier connecteur (34) au niveau d'une première extrémité (35) dans une direction d'agencement des première et seconde portions de réception (22) et un second connecteur (36) au niveau d'une seconde extrémité (37) opposée à la première extrémité (35) dans la direction d'agencement, dans lequel le premier connecteur (34) d'une fixation (16ₐ) et le second connecteur (36) d'une autre fixation (16_{b}) sont aptes à être reliés pour fixer les deux fixations (16ₐ, 16_{b}) l'une à l'autre.

10. Ensemble selon la revendication 9, dans lequel les fixations ont un nombre identique ou différent de portions de réception (22).

11. Ensemble selon la revendication 9 ou la revendication 10, dans lequel les fixations (16) comprennent chacune une partie (38, 39) d'une portion de réception (22) au niveau de la première extrémité (35) et de la seconde extrémité (37), dans lequel une partie (38) de la portion de réception au niveau d'une première extrémité (35) d'une première fixation (16ₐ) et une partie (39) de la portion de réception au niveau de la seconde extrémité (37) d'une seconde fixation (16_{b}) forment la portion de réception (22) lors de la connexion des première et seconde fixations.

12. Échangeur de chaleur de type bobine, en particulier pour un réservoir d'eau chaude, comprenant
un support (14),
une fixation (16) selon l'une quelconque des revendications 1 à 8 ou un ensemble selon l'une quelconque des revendications 9 à 11, dans lequel la/les fixations (16) sont montées sur le support (14),
un tube (13) inséré dans les première et seconde portions de réception (22), dans lequel le tube (13) dans la seconde portion de réception (22) est au moins en partie retenu par la portion de verrouillage (28) du dispositif de verrouillage (25).

13. Procédé pour fixer un tube (13) d'un échangeur de chaleur (11) de type bobine, comprenant les étapes de :
montage d'une fixation (16) sur un support (14) de l'échangeur de chaleur (11), la fixation comprenant une première portion de réception (22) et une seconde portion de réception (22) agencées côte à côte dans un corps principal (20) et ayant chacune une ouverture (23) ;
insertion d'un tube (13) par l'intermédiaire de l'ouverture (23) de la seconde portion de réception (22) dans la seconde portion de réception (22) ;
insertion du tube (13) par l'ouverture (23) de la première portion de réception (22) dans la première portion de réception, **caractérisé en ce que** le tube (13) déplace un dispositif de verrouillage (25) de la fixation (16) dans une position de verrouillage de sorte qu'une portion de verrouillage (28) du dispositif de verrouillage (25) bloque au moins une partie de l'ouverture (23) de la seconde portion de réception (22), retenant ainsi au moins en partie le tube (13) dans la seconde portion de réception (22).

14. Procédé selon la revendication 13, dans lequel la fixation (16) est une fixation selon l'une quelconque des revendications 1 à 8.

15. Procédé selon la revendication 13 ou la revendication 14, dans lequel la fixation (16) est une fixation selon la revendication 6, le procédé comprenant en outre l'étape de : déplacement manuel du dispositif de verrouillage d'extrémité (25^{v}) dans la position de verrouillage de sorte que la portion de verrouillage d'extrémité (28^{v}) du dispositif de verrouillage d'extrémité bloque au moins une partie de l'ouverture (23) de la première portion de réception (22), retenant ainsi au moins en partie le tube (13) dans la première portion de réception (22).

16. Procédé selon l'une quelconque des revendications 13 à 15, dans lequel une pluralité de fixations (16) sont montées sur le support (14) de l'échangeur de chaleur, dans lequel lorsque les fixations (16) font partie d'un ensemble selon les revendications 9 à 12, le procédé comprenant en outre une étape de :
connexion du premier connecteur (34) de l'une des fixations (16ₐ) et du second connecteur (37) d'une autre des fixations (16_{b}), fixant ainsi les fixations les unes aux autres.
